# EUROPÄISCHE PATENTSCHRIFT

(11) **EP 2 182 602 B1**
(45) Veröffentlichungstag und Bekanntmachung des Hinweises auf die Patenterteilung: **03.12.2014**
(21) Anmeldenummer: 08291009.2
(22) Anmeldetag: 28.10.2008
(51) Int. Cl.: H02G 15/103, H02G 15/18, H02G 15/184, H02G 15/24

(54) **Vorrichtung für eine Verbindungungsstelle zwischen zwei elektrischen Hochspannungskabeln**
Device for a connection piece between two electric high voltage cables
Dispositif destiné à une position de connexion entre deux câbles électriques haute tension

(43) Veröffentlichungstag der Anmeldung: 05.05.2010
(73) Patentinhaber: Nexans, 75008 Paris (FR)
(72) Erfinder: Aue, Volker, Dipl.-Ing., 44137 Dortmund (DE)
(74) Vertreter: Döring, Roger

(56) Entgegenhaltungen:
- DE-A1- 4 239 648
- DE-A1- 19 753 512
- FR-A- 2 557 390

## Beschreibung

Die Erfindung bezieht sich auf eine Vorrichtung für eine Verbindungsstelle zwischen einem papierisolierten, mit einem fließfähigen Isoliermedium imprägnierten elektrischen Hochspannungskabel und einem kunststoffisolierten elektrischen Hochspannungskabel, bei welcher am Ende des papierisolierten Hochspannungskabels ein von einem druckfesten Schottisolator umgebener Endenabschluß vorgesehen ist und bei welcher die Verbindungsstelle der Leiter der beiden Hochspannungskabel von elektrischen Schirmelementen und einem Muffenkörper umgeben ist (DE 42 09 831 C2).

Eine derartige Vorrichtung bzw. Übergangsmuffe wird benötigt, um bereits verlegte und noch im Einsatz befindliche Hochspannungskabel, deren Papierisolierung mit einem fließfähigen Isoliermedium imprägniert ist, mit heute üblichen, kunststoffisolierten Hochspannungskabeln zu verbinden. Bei den erstgenannten Hochspannungskabeln werden in bekannter Technik Öl oder Gas, beispielsweise Stickstoff, als Imprägniermittel eingesetzt. Es kann sich bei diesen Kabeln um Gasaußendruckkabel, Gasinnendruckkabel, Niederdruckölkabel oder Hochdruckölkabel handeln. Stellvertretend für alle möglichen Ausführungsformen wird im folgenden das Wort "Papierkabel" verwendet. Das kunststoffisolierte Kabel wird im folgenden der Einfachheit halber als "Kunststoffkabel" bezeichnet.

An dem für eine Verbindung mit einem anderen Hochspannungskabel vorgesehenen Enden weist das Papierkabel zum druckdichten Verschließen einen beispielsweise aus Epoxyharz bestehenden Schottisolator auf. Der Schottisolator ist unter Einschluß eines umlaufenden Ringspalts zum Durchlaß des Imprögniermittels um das Kabelende herumgeformt. Er hat als wirksamer Endverschluß einen relativ großen Außendurchmesser. Die Verbindungsstelle eines solchen Papierkabels mit einem Kunststoffkabel erfordert einen entsprechend hohen Aufwand, weil der Außendurchmesser eines Kunststoffkabels wesentlich kleiner als der Außendurchmesser des Schottisolators ist.

Aus der FR-A-2 557 390 geht eine Verbindungsstelle zwischen einem papierisolierten Mittelspannungskabel und einem Kunststoffkabel hervor. Die elektrischen Leiter beider Kabel sind mittels einer Verbindungshülse miteinander verbunden. Das Ende des Öl enthaltenden, papierisolierten Kabels ist durch einen Schlauch aus einem ölbeständigen elastomeren Material abgedichtet. Auf die Enden beider Kabel sind feldsteuernde Einrichtungen aufgeschoben. Die ganze Verbindungsstelle ist von einem Muffenkörper umgeben, der auf den beiden feldsteuernden Einrichtungen aufliegt.

Bei der als Übergangsmuffe bezeichneten bekannten Vorrichtung nach der eingangs erwähnten DE 42 09 831 C2 ist um die Verbindungsstelle zwischen den Leitern des Papierkabels und des Kunststoffkabels eine Bewicklung aus leitfähigen Bändern herum angebracht. Über der Bewicklung liegt eine Muffenisolierung, die beispielsweise aus selbstverschweißenden Bändern auf Basis Ethylen-Propylen-Kautschuk besteht, welche unter Zugspannung aufgewickelt sind. Die Muffenisolierung hat einen gleichbleibenden Außendurchmesser und ragt mit entsprechend unterschiedlichen Dickenabmessungen einerseits bis über das Kunststoffkabel bzw. dessen freigelegte Schichten und andererseits bis über den Schottisolator des Papierkabels. Die ganze Verbindungsstelle ist von einer Aluminium-Folie als Diffusionssperre und von Schrumpfschläuchen als mechanischer Schutz umgeben. Zusätzlich kann diese Übergangsmuffe durch ein Gehäuse aus glasfaserverstärktem Kunststoff geschützt sein. Der Aufwand zur Herstellung dieser Verbindungsstelle bzw. Übergangsmuffe ist insgesamt erheblich.

Der Erfindung liegt die Aufgabe zugrunde, die eingangs geschilderte Vorrichtung einfacher zu gestalten.

Diese Aufgabe wird gemäß der Erfindung durch die Merkmale des Anspruchs 1 gelöst.

Bei Einsatz dieses einteiligen Muffenkörpers können ein Papierkabel und ein Kunststoffkabel, die insbesondere durch den Schottisolator des Papierkabels einen erheblichen Durchmesserunterschied aufweisen, auf einfache Art und Weise miteinander verbunden werden. Der Muffenkörper kann mit üblichen Bauteilen als einteiliges Gebilde vorgefertigt werden, so daß er werkseitig auf seine elektrische Funktionsfähigkeit geprüft werden kann. Die Innendurchmesser der beiden an den Enden des Muffenkörpers vorhandenen Öffnungen des Durchgangslochs sind so bemessen, daß derselbe einerseits ohne Gefahr einer Überdehnung vor dem Durchverbinden der beiden Leiter auf eines der Kabel aufgeschoben werden kann, vorzugsweise auf das Kunststoffkabel. Andererseits wird der Muffenkörper an beiden Enden mit den dort befindlichen Steuertrichtern, trotz der stark unterschiedlichen Außendurchmesser der Auflageflächen der beiden Kabel, mit definierter Kraft gegen deren äußere leitfähige Schichten gepreßt, und zwar bei beiden Kabeln mit zumindest annähernd der gleichen Kraft. Das ist für die Funktionsfähigkeit des Muffenkörpers von wesentlicher Bedeutung, weil derselbe durch die definierte Bemessung der Enden des Durchgangslochs insbesondere Temperaturschwankungen unbeschadet folgen kann, wie sie im Betrieb einer Kabelstrecke auftreten. Hinzu kommt, daß durch diesen einteiligen Muffenkörper kein zusätzliches Isolierfluid mit zugehörigen Überwachungseinrichtungen benötigt wird.

Die Unterschiede der Innendurchmesser der beiden Enden des Durchgangslochs entsprechen mit Vorteil den Unterschieden der Außendurchmesser der entsprechenden Auflageflächen der beiden Kabel.

Ein Ausführungsbeispiel des Erfindungsgegenstandes ist in den Zeichnungen dargestellt.

Es zeigen:
Fig. 1 schematisch den grundsätzlichen Aufbau einer Verbindungsstelle zwischen zwei Hochspannungskabeln im Schnitt.
Fig. 2 einen Schnitt durch eine Vorrichtung nach der Erfindung.

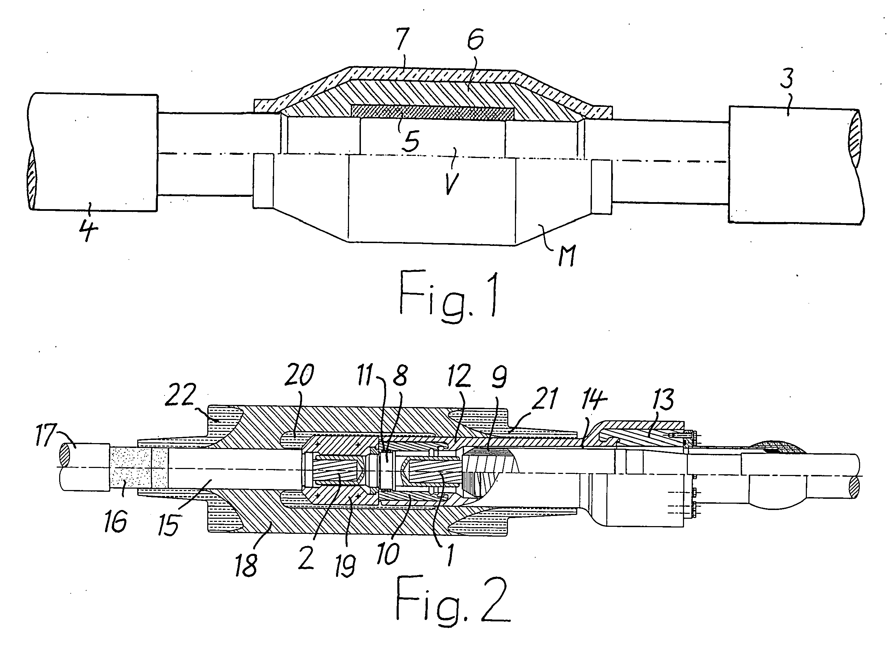

Die aus Fig. 2 ersichtlichen Leiter 1 und 2 zweier in einer Verbindungsstelle V nach Fig. 1 miteinander verbundener Hochspannungskabel 3 und 4 sind in der Verbindungsstelle V elektrisch leitend miteinander verbunden. Über der Verbindungsstelle V ist eine Verbindungsmuffe M angebracht, die als vorgefertigtes Bauteil eine leitfähige Abschirmung 5 und einen Formkörper 6 aus elastischem Isoliermaterial aufweisen kann, auf dem eine leitfähige äußere Beschichtung 7 angebracht sein kann. Die Beschichtung 7 hat elektrisch leitenden Kontakt mit äußeren elektrisch leitenden Schichten der beiden Kabel 3 und 4. Die Verbindungsmuffe M sitzt mit Preßsitz auf den von ihr umschlossenen Teilen.

Die Leiter 1 und 2 können mehrdrähtig oder massiv sein. Sie können rund oder segmentförmig ausgeführt sein. Sie können rund oder segmentförmig ausgeführt sein. Sie können aus Kupfer oder Aluminium bestehen. Die Leiter 1 und 2 sind jeweils von einer auch als Leiterglättung bezeichneten inneren Leitschicht umgeben ist. Diese innere Leitschicht ist in der Zeichnung nicht mit dargestellt.

Bei der Vorrichtung nach der Erfindung ist das Hochspannungskabel 3 ein Papierkabel 3 und das Hochspannungskabel 4 ein Kunststoffkabel 4.

Der Aufbau des Papierkabels 3 ist an sich bekannt. Es weist einen äußeren, aus Metall bestehenden Mantel auf. Sein Leiter 1 ist für die Verbindung mit dem Leiter 2 des Kunststoffkabels 4 freigelegt. Für die Verbindung der beiden Leiter 1 und 2 ist ein vorzugsweise aus Kupfer bestehendes Verbindungsstück 8 eingesetzt. Es besteht mit Vorteil aus dem gleichen Material wie die Leiter 1 und 2. Das Ende der Isolierung des Papierkabels 3 ist durch Papierlagen 9 aufgedickt. Über dem Verbindungsstück 8 ist im Bereich des Leiters 1 eine Koppelelektrode 10 angebracht, die an ihrem dem Papierkabel 3 abgewandten Ende gegenüber dem Verbindungsstück 8 durch eine Dichtung 11 hermetisch abgedichtet ist. Das Ende des Papierkabels 3 ist zur Bildung eines Endverschlusses von einem beispielsweise aus Epoxyharz bestehenden Schottisolator 12 rundum umgeben. Die Koppelelektrode 10 ist flüssigkeits- und gasdicht in den Schottisolator 12 eingegossen. Am anderen Ende des Schottisolators 12 ist flüssigkeits- und gasdicht eine Metallhülse 13 eingegossen, an die ein mit dem Mantel des Papierkabels 3 verbundener Trichter geschraubt ist. Zwischen dem Schottisolator 12 und den von demselben umgebenen Teilen des Papierkabels 3 verbleibt ein umlaufender Spalt 14 zum Durchtritt des Imprägniermittels, beispielsweise eines Isolieröls.

Der Aufbau des Kunststoffkabels 4 ist ebenfalls an sich bekannt. Über dem Leiter 2 des Kunststoffkabels 4 ist in üblicher Technik als Leiterglättung eine innere Leitschicht aus elektrisch leitendem Material angebracht, welche von einer Isolierung umgeben ist. Die Isolierung besteht in der Regel aus vernetztem Polyethylen. Auf der Isolierung 15 des Kunststoffkabels 4 ist eine äußere Leitschicht 16 aus elektrisch leitendem Material angebracht, die von einem Außenmantel 17 aus Isoliermaterial umgeben ist. Zur Herstellung der Verbindungsstelle mit dem Papierkabel 3 sind der Außenmantel 17 und die äußere Leitschicht 16 auf entsprechenden, unterschiedlichen Längen entfernt.

Die Vorrichtung nach der Erfindung ist als Ausführungsbeispiel in Fig. 2 dargestellt. Sie besteht aus einem einteiligen Muffenkörper 18 aus Isoliermaterial, der die Verbindungsstelle zwischen Papierkabel 3 und Kunststoffkabel 4 abdeckt, welche an den Auflagestellen des Muffenkörpers 18 stark unterschiedliche Außendurchmesser haben. So soll der Außendurchmesser über der Isolierung 15 bzw. der äußeren Leitschicht 16 des Kunststoffkabels 4 um mindestens 10 mm kleiner als der Außendurchmesser des Schottisolators 12 des Papierkabels 3 sein. Die Leiter 1 und 2 der beiden Kabel 3 und 4 haben im dargestellten Ausführungsbeispiel gleiche Abmessungen und sie sind gleichartig aufgebaut. Sie können aber auch unterschiedliche Abmessungen haben mit entsprechend veränderter bzw. angepaßter Dicke der Isolierungen der beiden Kabel 3 und 4. Im Bereich des Leiters 2 ist über dem Verbindungsstück 8 ein beispielsweise aus Aluminium bestehendes Füllstück 19 angebracht, dessen Außendurchmesser dem Außendurchmesser des Schottisolators 12 entspricht. Um die Verbindungsstelle zwischen den beiden Leiter 1 und 2 insgesamt, mit allen geschilderten Einzelteilen, ist eine Abschirmelektrode 20 angeordnet. Sie ist Bestandteil des Muffenkörpers 18 und besteht mit Vorteil aus dem gleichen, elektrisch leitfähig gemachtem Material wie derselbe.

Die ganze Verbindungsstelle ist von dem Muffenkörper 18 aus elastischem, vorzugsweise aus dauerelastischem Isoliermaterial umgeben, an dessen beiden Enden je ein Steuerrichter 21 bzw. 22 angebracht ist. Der Muffenkörper 18 besteht ebenso wie die Abschirmelektrode 20 mit Vorteil aus einem Ethylen-Propylen-Terpolymer (EPDM) oder aus Silikongummi. Die Steuertrichter 21 und 22 sind in den Muffenkörper 17 integriert. Sie bestehen mit Vorteil ebenfalls aus dem gleichen Material wie der Muffenkörper 18 und sind elektrisch leitfähig gemacht. Die Steuertrichter 21 und 22 liegen mit definiertem Preßsitz an der jeweiligen elektrisch leitenden äußeren Schicht an den Enden der beiden Kabel 3 und 4 an.

Der Muffenkörper 18 ist mit seinem "Innenleben" an die unterschiedlichen Außendurchmesser von Isolierung 15 bzw. äußerer Leitschicht 16 und Schottisolator 12 sowie an das Füllstück 19 angepaßt. Er hat ein Durchgangsloch, das dementsprechend in seinem Verlauf abgestuft ist und an seinen beiden axialen Enden Innendurchmesser aufweist, die ebenso stark unterschiedlich sind, wie die Außendurchmesser der Anlageflächen der beiden Kabel 3 und 4. Der Unterschied der Innendurchmesser an den Enden des Durchgangslochs beträgt mit Vorteil - in Anpassung an die Außendurchmesser der Auflageflächen der beiden Kabel 3 und 4 - ebenfalls mindestens 10 mm.

Die Innendurchmesser der Öffnungen an den Enden des Durchgangslochs des Muffenkörpers 18 sind definiert so bemessen, daß der Muffenkörper 18 bzw. seine Steuertrichter 21 und 22 mit vorgegebenem Preßsitz an der Isolierung 15 bzw. der äußeren Leitschicht 16 einerseits und an dem Schottisolator 12 andererseits anliegen. Sie haben im Ruhezustand des Muffenkörpers 18 gegenüber den Außendurchmessern der Auflageflächen der beiden Kabel 3 und 4 mit Vorteil ein solches Untermaß, daß sie um mindestens 8 % aufgeweitet werden müssen, um in Montageposition ausreichend fest an der jeweiligen elektrischen Grenzschicht der beiden Kabel 3 und 4 anzuliegen. Eine Obergrenze für die erforderliche Aufweitung des Durchgangslochs an den Enden des Muffenkörpers 18 liegt bei etwa 33 %.

Bei der Montage der Vorrichtung nach der Erfindung wird beispielsweise wie folgt vorgegangen:
Nach Vorbereitung der Enden der beiden zu verbindenden Kabel 3 und 4 entsprechend der vorangehenden Beschreibung wird der Muffenkörper 18 montiert. Er kann mit entsprechender Aufweitung seines Durchgangslochs mit Vorteil auf das Ende des Kunststoffkabels 4 in eine Parkposition aufgeschoben werden. Anschließend wird der Leiter 2 des Kunststoffkabels 4 mit dem Verbindungsstück 8 am Ende des Leiters 1 des Papierkabels 3 elektrisch leitend verbunden. Über der Verbindungsstelle der beiden Leiter 1 und 2 wird am Ende des Schottisolators 12 das Füllstück 19 montiert. Abschließend wird der Muffenkörper 18 in seine Endposition verschoben, in welcher die Abschirmelektrode 20 am Füllstück 19 anliegt und in welcher seine Steuertrichter 21 und 22 mit Preßsitz an der äußeren Leitschicht 16 des Kunststoffkabels 4 und am Schottisolator 12 des Papierkabels 3 anliegen.
Nach abgeschlossener Montage des Muffenkörpers 18 kann über demselben eine äußere Umhüllung angebracht werden. Die im Aufbau der Kabel 3 und 4 vorhandenen elektrisch leitenden Schirme können in einer solchen Umhüllung durchverbunden werden. Statt dieser Art der Umhüllung kann um den Muffenkörper 18 auch ein Metallgehäuse mit Isoliermantel herum angebracht werden.

## Patentansprüche

1. Vorrichtung für eine Verbindungsstelle zwischen einem papierisolierten, mit einem fließfähigen Isoliermedium imprägnierten elektrischen Hochspannungskabel (3) und einem kunststoffisolierten elektrischen Hochspannungskabel (4), bei welcher am Ende des papierisolierten Hochspannungskabels ein von einem druckfesten Schottisolator umgebener Endenabschluß vorgesehen ist und bei welcher die Verbindungsstelle der Leiter der beiden Hochspannungskabel von elektrischen Schirmelementen und einem Muffenkörper (18) umgeben ist, wobei
- der Muffenkörper (18) als langgestrecktes, einteiliges Bauteil aus elastischem Isoliermaterial mit einem Durchgangsloch zur Aufnahme der beiden Hochspannungskabel (3,4) ausgeführt ist,
- der Muffenkörper (18) an seinen beiden zur Aufnahme der Hochspannungskabel (3,4) bestimmten axialen Enden mit elektrischen Steuertrichtern (21,22) ausgerüstet ist, die in Montageposition an elektrisch leitenden Schichten der beiden Hochspannungskabel (3,4) anliegen, und
- die Innendurchmesser des Durchgangslochs des Muffenkörpers (18) an seinen beiden mit den Steuertrichtern (21,22) ausgerüsteten axialen Enden zur Aufnahme der beiden Hochspannungskabel (3,4), deren Außendurchmesser in den Anlagebereichen des Muffenkörpers (18) um mindestens 10 mm unterschiedlich sind, angepaßt an diese unterschiedlichen Außendurchmesser definiert unterschiedlich bemessen sind.

2. Vorrichtung nach Anspruch 1, **dadurch gekennzeichnet, daß** der Unterschied zwischen den Innendurchmessern des Durchgangslochs an den beiden axialen Enden des Muffenkörpers (18) gleich dem Unterschied zwischen den Außendurchmessern der beiden Anlageflächen des kunststoffisolierten Hochspannungskabels (4) einerseits und des Schottisolators (12) andererseits ist.

3. Vorrichtung nach Anspruch 1 oder 2, **dadurch gekennzeichnet, daß** das Durchgangsloch des Muffenkörpers (18) an seinen Enden Innendurchmesser mit einem Untermaß gegenüber den Anlageflächen der beiden Hochspannungskabel (3,4) aufweist, das eine Aufweitung des Durchgangslochs zum Erreichen der Montageposition um mindestens 8 % erfordert.

4. Vorrichtung nach einem der Ansprüche 1 bis 3, **dadurch gekennzeichnet, daß** der Muffenkörper (18) aus einem Ethylen-Propylen-Terpolymer oder aus Silikongummi besteht.

5. Vorrichtung nach einem der Ansprüche 1 bis 4, **dadurch gekennzeichnet, daß** die axialen Enden des Muffenkörpers (18) zur Bildung der Steuertrichter (21,22) aus elektrisch leitfähig gemachtem Ethylen-Propylen-Terpolymer bzw. Silikongummi bestehen.

6. Vorrichtung nach einem der Ansprüche 1 bis 5, **dadurch gekennzeichnet, daß** über der Verbindungsstelle der Leiter (1,2) der beiden Hochspannungskabels (3,4) eine Abschirmelektrode (20) aus elektrisch leitfähig gemachtem Ethylen-Propylen-Terpolymer bzw. Silikongummi angebracht ist.

## Claims

1. Arrangement for a connection device between a paper-insulated electrical high-voltage cable (3), which is impregnated with a flowable insulating medium, and a plastic-insulated electrical high-voltage cable (4), in which an end termination, which is surrounded by a pressure-resistant partition isolator, is provided at the end of the paper-insulated high-voltage cable, and in which the connection device of the conductors of the two high-voltage cables is surrounded by electrical screening elements and a sleeve body (18) wherein
- the sleeve body (18) is in the form of an elongated, integral component consisting of elastic insulating material with a throughhole for the receiption of the two high-voltage cables (3,4),
- the sleeve body (18) is equipped at its two axial ends, which are intended to receipt the high-voltage cables (3,4), with electrical control funnels (21,22) which in mounting position abut to electrically conductive layers of the two high-voltage cables (3,4), and
- the internal diameters of the throughhole of the sleeve body (18) at its two axial ends which are equipped with the control funnels (21,22) are of different defined sizes, in order to receipt the two high-voltage cables (3,4), whose external diameters differ by at least 10 mm in the contact areas of the sleeve body (18), matched to these different external diameters.

2. Arrangement according to claim 1, **characterized in that** the difference between the internal diameters of the aperture hole at the two axial ends of the sleeve body (18) is equal to the difference between the external diameters of the two contact surfaces of the plastic-insulated high-voltage cable (4) on the one hand and the partition isolator (12) on the other hand.

3. Arrangement according to claim 1 or 2, **characterized in that** the aperture hole in the sleeve body (18) has an internal diameter at its ends which is undersize in comparison to the contact surfaces of the two high-voltage cables (3, 4), requiring the aperture hole to be widened by at least 8% in order to reach the fitting position.

4. Arrangement according to one of the claims 1 to 3, **characterized in that** the sleeve body (18) consists of an ethylene-propylene terpolymer or of silicone rubber.

5. Arrangement according to one of the claims 1 to 4, **characterized in that**, in order to form the control funnels (21, 22), the axial ends of the sleeve body (18) consist of ethylene-propylene terpolymer or silicone rubber which has been made electrically conductive.

6. Arrangement according to one of the claims 1 to 5, **characterized in that** a screening electrode (20) consisting of ethylene-propylene terpolymer or silicone rubber which has been made electrically conductive is fitted over the connection point of the conductors (1, 2) of the two high-voltage cables (3, 4).

## Revendications

1. Dispositif destiné à une position de connexion entre un câble électrique haute tension isolé au papier et imprégné avec un agent isolant liquide (3) et un câble électrique haute tension isolé au plastique (4), dans lequel il est prévu à l'extrémité du câble haute tension isolé au papier une fermeture d'extrémité entourée par un isolateur de cloison résistant à la pression et dans lequel la position de connexion des conducteurs des deux câbles haute tension est entourée par des éléments de protection électriques et un corps de connecteur (18), dans lequel
- le corps de connecteur (18) est réalisé sous la forme d'un composant unique allongé en matériau isolant élastique présentant un trou de passage destiné à recevoir les deux câbles haute tension (3, 4),
- le corps de connecteur (18) est muni à ses deux extrémités axiales destinées à recevoir les câbles haute tension (3, 4) d'embouts de commande électriques (21, 22), qui s'appliquent en position de montage sur des couches électriquement conductrices des deux câbles haute tension (3, 4), et
- les diamètres intérieurs du trou de passage du corps de connecteur (18) à ses deux extrémités axiales munies des embouts de commande (21, 22) destinées à recevoir les deux câbles haute tension (3, 4), dont les diamètres extérieurs sont différents d'au moins 10 mm dans la région d'application du corps de connecteur (18), sont dimensionnés différemment en étant définis de façon adaptée à ces diamètres extérieurs différents.

2. Dispositif selon la revendication 1, **caractérisé en ce que** la différence entre les diamètres intérieurs du trou de passage aux deux extrémités axiales du corps de connecteur (18) est égale à la différence entre les diamètres extérieurs des deux faces d'application du câble haute tension isolé au plastique (4) d'une part et de l'isolateur de cloison (12) d'autre part.

3. Dispositif selon la revendication 1 ou 2, **caractérisé en ce que** le trou de passage du corps de connecteur (18) présente à ses extrémités des diamètres intérieurs sous-dimensionnés par rapport aux faces d'application des deux câbles haute tension (3, 4), de façon à nécessiter un élargissement du trou de passage d'au moins 8 % pour atteindre la position de montage.

4. Dispositif selon l'une quelconque des revendications 1 à 3, **caractérisé en ce que** le corps de connecteur (18) se compose d'un terpolymère éthylène-propylène ou de caoutchouc silicone.

5. Dispositif selon l'une quelconque des revendications 1 à 4, **caractérisé en ce que** les extrémités axiales du corps de connecteur (18) destinées à former les embouts de commande (21, 22) se composent de terpolymère éthylène-propylène ou de caoutchouc silicone rendu électriquement conducteur.

6. Dispositif selon l'une quelconque des revendications 1 à 5, **caractérisé en ce qu'**une électrode de protection (20) en terpolymère éthylène-propylène ou en caoutchouc silicone rendu électriquement conducteur est posée au-dessus de la position de connexion des conducteurs (1, 2) des deux câbles haute tension (3, 4).
